# EUROPÄISCHE PATENTSCHRIFT

(11) **EP 1 317 948 B1**
(45) Veröffentlichungstag und Bekanntmachung des Hinweises auf die Patenterteilung: **25.08.2010**
(21) Anmeldenummer: 02405957.8
(22) Anmeldetag: 06.11.2002
(51) Int. Cl.: B01D 3/20, B01D 3/22

(54) **Bodenkolonne**
Plate column
Colonne à plateaux

(30) Priorität: 05.12.2001 EP 01811181; 09.04.2002 EP 02405279
(43) Veröffentlichungstag der Anmeldung: 11.06.2003
(73) Patentinhaber: Sulzer Chemtech AG, 8404 Winterthur (CH)
(72) Erfinder: Fischer, Markus, 78462 Konstanz (DE)
(74) Vertreter: Sulzer Management AG

(56) Entgegenhaltungen:
- EP-A- 0 001 448
- US-A- 2 787 453
- US-A- 3 729 179
- US-A1- 2001 013 667
- US-B1- 6 224 043
- DATABASE WPI Section Ch, Week 198837 Derwent Publications Ltd., London, GB; Class D16, AN 1988-262760 XP002198243 & SU 1 377 136 A (SOLOMAKHA G P), 29. Februar 1988 (1988-02-29)

## Beschreibung

Die Erfindung betrifft eine Bodenkolonne gemäss Oberbegriff von Anspruch 1.

Eine Bodenkolonne enthält perforierte Böden (auch Trennböden genannt), auf denen jeweils eine von unten nach oben strömende Gasphase im Kreuzstrom mit einer auf dem Boden fliessenden Flüssigkeitsphase zwecks Stoffaustausch in Kontakt gebracht wird. In jeden Trennboden ist mindestens ein Ablaufschacht (englisch "downcomer") für einen Flüssigkeitstransport zwischen diesem Boden und einem darunter liegenden Boden eingebaut, der nachfolgend mit "beaufschlagtem Boden" bezeichnet wird. In der US-A 5 454 989 ist eine Bodenkolonne beschrieben, deren Ablaufschächte in einer besonderen Form ausgebildet sind: Austrittsöffnungen sind in einer Sohle angeordnet, die einen unteren Abschluss des Ablaufschachts bildet. Die Sohle befindet sich in einem Abstand über einem Niveau, das auf dem beaufschlagten Boden durch die obere Grenzfläche eines Flüssigkeit/GasGemisches gegeben ist. Die Austrittsöffnungen sind auf einen Bereich beschränkt, von dem aus sich die in Form von Strahlen abgegebene Flüssigkeit über den beaufschlagten Boden teilweise quer zu einer Hauptströmungsrichtung ausbreiten muss. Eine weitere Bodenkolonne mit ähnlichen Ablaufschächten ist aus US-A- 6 250 611 bekannt.

Das Ausbreiten der Flüssigkeit auf dem beaufschlagten Boden erfolgt in einem inhomogenen Strömungsfeld, das in einem mittleren Bereich hohe Geschwindigkeiten der Strömung und in seitlichen Bereichen geringe Geschwindigkeiten aufweist. Die Inhomogenitäten des Strömungsfelds bedeuten, dass die Flüssigkeit mit verschiedenen Verweilzeiten das Stoffaustauschvolumen durchströmt. Um einen verbesserten Stoffaustausch zu erhalten, muss das Strömungsfeld so beeinflusst werden, dass sich eine Angleichung der Verweilzeiten ergibt. In der US2787458 wird die Flüssigkeit durch Leitschaufeln auf dem Boden in elliptische Bahnen gelenkt. Hierdurch sollen unterschiedliche Flüssigkeitshöhen im Eintrittsbereich des Bodens verhindert werden. In der US3729179 werden hierzu am Ablaufschacht angebrachte, höhenverstellbare Fingerelemente verwendet.

Aufgabe der Erfindung ist es, die genannte Bodenkolonne so weiter zu entwickeln, dass für die einzelnen Trennböden durch Beeinflussung des Strömungsfelds ein verbesserter Stoffaustausch erhalten wird. Diese Aufgabe wird durch die im Anspruch 1 definierte Bodenkolonne gelöst.

Die Bodenkolonne weist Ablaufschächte für einen Transport einer Flüssigkeit zwischen benachbarten Böden auf. Der Flüssigkeitstransport erfolgt in jedem Ablaufschacht durch eine Vielzahl von Austrittsöffnungen auf einen beaufschlagten Boden. Flüssigkeit, die den Austrittsöffnungen in Form von Strahlen entströmt, geht beim Auftreffen auf den beaufschlagten Boden in ein bereichsweise divergentes Strömungsfeld über, das bezüglich einer longitudinalen Hauptströmungsrichtung transversale Komponenten der Strömungsgeschwindigkeit aufweist. Unter den Austrittsöffnungen und in einem Abstand vom beaufschlagten Boden sind Leitelemente angeordnet. Diese lenken jeweils den Impuls der Flüssigkeit auf eine dem divergenten Strömungsfeld entsprechenden Weise. Mit den Leitelementen wird zur Ausbildung der transversalen Geschwindigkeitskomponenten beigetragen, so dass die longitudinale Komponente der Strömungsgeschwindigkeit in jeder Ebene senkrecht zur Hauptströmungsrichtung ein weitgehend konstantes Profil aufweist. Vorzugsweise sind die Austrittsöffnungen in gradueller Weise verschieden gross ausgebildet, in einem zentralen Bereich kleiner als in benachbarten Flankenbereichen.

Die abhängigen Ansprüche 2 bis 11 betreffen vorteilhafte Ausführungsformen der erfindungsgemässen Bodenkolonne.

Nachfolgend wird die Erfindung anhand der Zeichnungen erläutert. Es zeigen:
- Fig. 1: einen Abschnitt einer längsgeschnittenen erfindungsgemässen Bodenkolonne, zwei benachbarte Trennböden umfassend,
- Fig. 2: Strömungsverhältnisse auf und über einem Trennboden der in Fig. 1 dargestellten Bodenkolonne,
- Fig. 3: Rostelemente eines Trennbodens,
- Fig. 4: eine Gitteranordnung mit Rostelementen,
- Fig. 5: eine Reihe von Austrittsöffnungen eines Ablaufschachts für eine erfindungsgemässe Bodenkolonne,
- Fig. 6, 7: variante Ausführungsformen der Austrittsöffnungen
- Fig. 8: eine Darstellung eines Auslegungsverfahrens für die Austrittsöffnungen,
- Fig. 9: einen Strömungsbrecher mit Leitelementen, der unter dem Ablaufschacht auf dem Trennboden angeordnet ist und
- Fig. 10, 11: zwei Modifikationen des erfindungsgemässen Ablaufschachts.

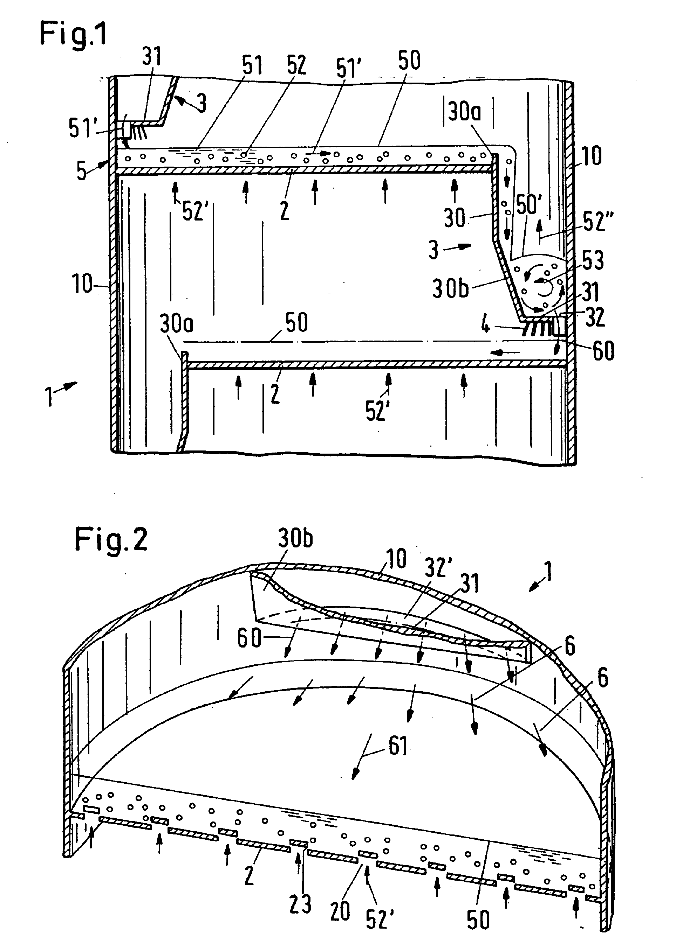

Die in den Figuren 1 und 2 dargestellte Bodenkolonne 1 enthält Trennböden 2. Eine flüssige Phase 51 (Pfeile 51') fliesst aus einem Ablaufschacht 3 und in Form eines Flüssigkeit/Gas-Gemisches 5 über den Boden 2 zu einem weiteren Ablaufschacht 3, durch den ein weiterer Flüssigkeitstransport zum benachbarten Boden 2 - unter einer Abtrennung des gasförmigen Anteils - erfolgt. Durch Perforationen 23 der Böden 2 strömt eine Gasphase 52 (Pfeile 52') von unten nach oben und durchquert im Kreuzstrom in Form von Blasen das Flüssigkeit/Gas-Gemisch 5. Es findet ein Stoff- und/oder Wärmeaustausch zwischen den koexistierenden Phasen 51 und 52 statt.

Das Flüssigkeit/Gas-Gemisch 5 besteht aus einem flüssigkeitsreichen unteren Bereich, dessen obere Begrenzung auf einem Niveau 50 liegt, und einem gasreichen Schaum, der sich über dem Niveau 50 befindet. Der Schaum ist in den Figuren 1 und 2 nicht dargestellt. Den unteren Abschluss des Ablaufschachts 3 bildet eine Sohle mit einer Vielzahl von Austrittsöffnungen 32. Die Sohle befindet sich in einem Abstand über dem Niveau 50.

Die Austrittsöffnungen 32 sind auf einen Bereich 32' beschränkt, von dem aus sich die in Form von Strahlen 60 abgegebene Flüssigkeit 51 über den beaufschlagten Boden 2 ausbreitet. Die Flüssigkeitsstrahlen 60, die den Austrittsöffnungen 32 entströmen, gehen beim Auftreffen auf den beaufschlagten Boden 2 in ein bereichsweise divergentes Strömungsfeld 6 über, das bezüglich einer longitudinalen Hauptströmungsrichtung 61 transversale Geschwindigkeitskomponenten aufweist. Die Austrittsöffnungen 32 sind - mindestens zu einem Teil - mit Leitelementen 4 versehen, die jeweils den Impuls des Flüssigkeitsstrahls 60 lenken, entsprechend der angestrebten Ausbildung des divergenten Strömungsfelds 6, und dabei insbesondere dazu beitragen, dass die transversalen Komponenten der Strömungsgeschwindigkeit ausreichend gross ausgebildet sind.

Die Austrittsöffnungen 32 sind in einem Ringsegment 32' benachbart zu einer Kolonnenwand 10 angeordnet. Die Flüssigkeitsstrahlen 60 werden geleitet einerseits durch die Kolonnenwand 10 und andererseits zumindest zu einem Teil durch schaufelartige Leitelemente 4, die jeweils am Rand einer Austrittsöffnung 32 angebracht sind. Jedes Leitelement 4 ist so ausgebildet, dass seine Position und seine Neigung den zu bewirkenden transversalen Geschwindigkeitskomponenten entsprechen. Aufgrund der Leitelemente 4 ergeben sich in den seitlichen Bereichen des Strömungsfeldes 6 Angleichungen der Geschwindigkeiten an jene des inneren Bereichs, wodurch sich auch eine Angleichungen der Verweilzeiten und damit ein verbessertes Ergebnis der Austauschprozesse ergibt.

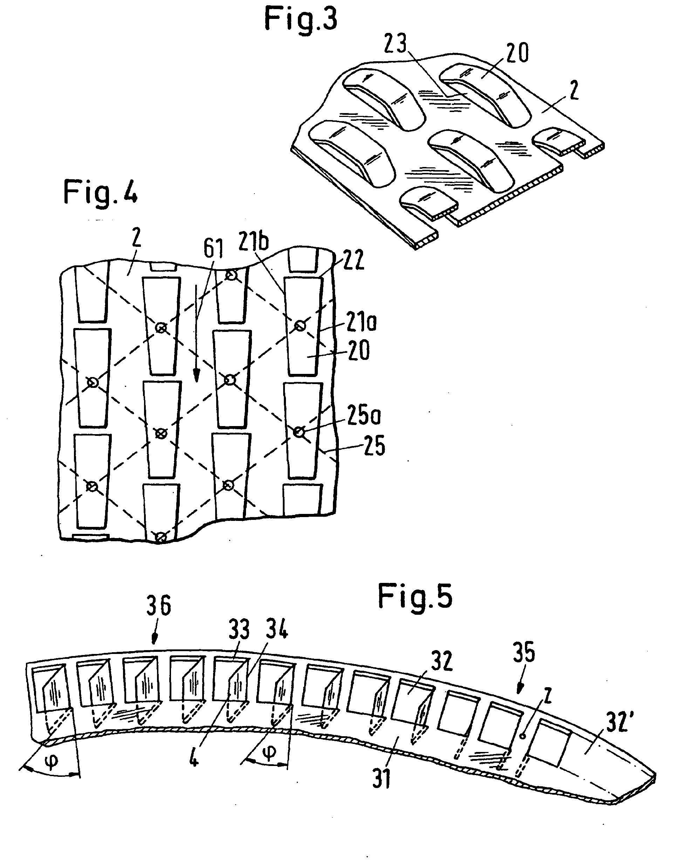

Die Perforation der Böden 2 ist beispielsweise durch eine Vielzahl von Rostelementen 20, wie sie in den Figuren 3 und 4 gezeigt sind, gegeben. (Die Böden 2 können beispielsweise auch als Siebböden ausgebildet sein.) Die Rostelementen 20 haben jeweils die Form eines Trapezes, wobei nichtparallele Flanken 21 a und 21 b des Trapezes länger als eine Basisseite 22 sind. Die Basisseiten 22 sind quer zur Hauptströmungsrichtung 6 orientiert. Die Flanken der Rostelemente 20 sind als Schlitze 23 ausgebildet. Die Rostelemente 20 verjüngen sich in der Hauptströmungsrichtung 6, so dass das durch die Schlitze 23 austretende Gas 52 eine fördernde Wirkung auf den Transport der Flüssigkeit 51 hat. Vorzugsweise sind alle Rostelemente 20 gleich orientiert und auf Kreuzungspunkten 25a eines regelmässigen Gitters 25 angeordnet.

Die beschriebene Bodenkolonne 1 hat einen kreisförmigen Querschnitt. In jeden Boden 2 ist ein Ablaufschacht 3 eingebaut. Die Ablaufschächte 3 benachbarter Böden 2 sind diametral zueinander angeordnet.

Ein Teil des Ablaufschachts 3, der einen Raumbereich zwischen einer Innenwand 30 und der Kolonnenwand 10 unmittelbar über der Sohle 31 einnimmt, hat aufgrund eines geneigten Wandteils 30b eine nach unten sich verjüngende Form. Das in den Ablaufschacht 3 über ein Wehr 30a einströmende Flüssigkeit/Gas-Gemisch 5 wird in dem sich verjüngenden Teil bis zu einem stationären Niveau 50' aufgestaut. Aus dem Gemisch 5 wird die Gasphase 52 (Pfeil 52") abgeschieden. Es bildet sich eine Flüssigkeitswalze 53 aus, die durch die zuströmende Flüssigkeit 51 angetrieben wird. Aus der Flüssigkeitswalze 53 wird laufend ein Teil der Flüssigkeit 51 durch die Austrittsöffnungen 52 weiter transportiert. Dank der Ausbildung der Flüssigkeitswalze 53 wird die kinetische Energie der Flüssigkeitsströmung nur teilweise dissipiert. Die erhalten gebliebene kinetische Energie wird nach dem Weitertransport auf den beaufschlagten Boden 2 zur Beeinflussung des divergenten Strömungsfeldes 6 genutzt.

Damit sich beim Ausströmen der Flüssigkeit 51 aus den Austrittsöffnungen 32 nicht eine vermeidbare Dissipation der kinetische Energie ergibt, sind die Austrittsöffnungen 32 in einer Reihe angeordnet. Ein erstes Beispiel ist in Fig. 5 gezeigt. Die Austrittsöffnungen 32 sind durch partiell ausgeschnittene (Schnittkante 33) sowie um eine Kante 34 ausgebogene Innenflächen hergestellt. Die ausgebogenen Innenflächen bilden die schaufelartigen Leitelemente 4.

Die Leitelemente 4 weisen verschiedene Neigungswinkel ϕ auf. In Bezug auf das Zentrum Z der Reihe der Austrittsöffnungen 32 wächst der Neigungswinkel ϕ mit zunehmender Entfernung vom Zentrum Z graduell an; insbesondere wächst er von 0° bis 60°, vorzugsweise bis 45° an.

Bei dem anhand der Figuren 1, 2 und 5 beschriebenen Ausführungsbeispiel sind die Austrittsöffnungen 32 verschieden gross ausgebildet. Bei der reihenförmigen Anordnung sind in einem mittleren Bereich 35 der Reihe die Austrittsöffnungen 32 kleiner als in zwei an den mittleren Bereich 35 angrenzenden Flügelbereichen 36 und zwar so, dass durch die grösseren Austrittsöffnungen 32 auf die Länge der Reihe bezogen spezifisch mehr Flüssigkeit abgegeben wird. Dies ist erforderlich, da für die seitlichen Bereiche des divergenten Strömungsfelds 61 zusätzliche Mengen an Flüssigkeit 51 auf dem beaufschlagten Boden 2 benötigt werden, die durch die Flügelbereiche 36 des Ablaufschachts 3 in die seitlichen Bereiche abzugeben sind.

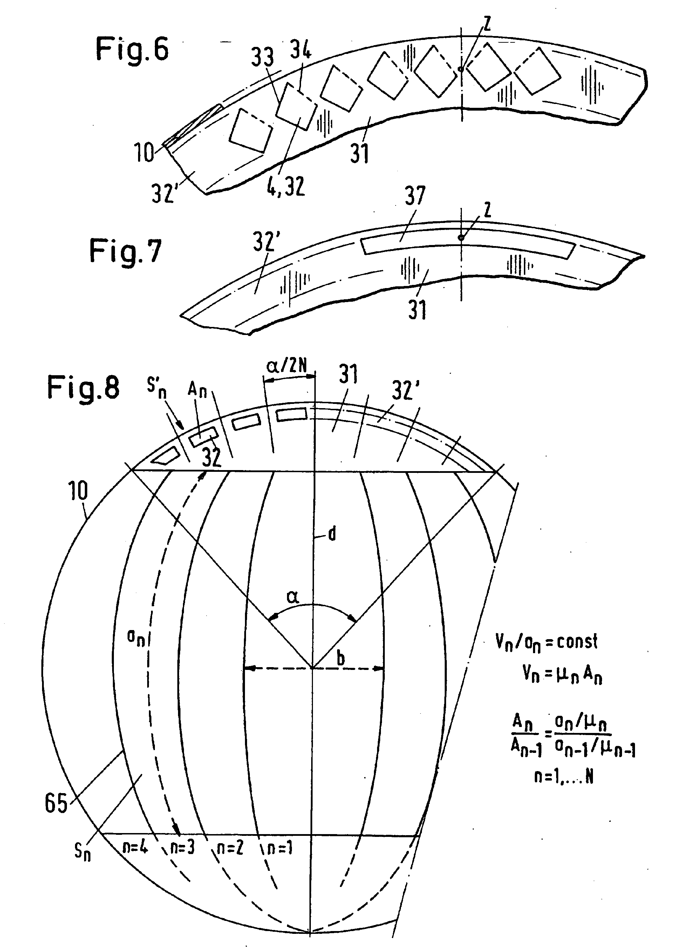

Bei der in Fig. 6 gezeigten Ausführungsform der Austrittsöffnungen 32 sind diese anders orientiert. Die Biegekanten 34 sind nicht mehr senkrecht zur Kolonnenwand 10. Es sind alle Austrittsöffnungen 32 der Einfachheit halber gleich gross gezeichnet. Aber auch hier ist es erforderlich, dass die Austrittsöffnungen 32 in Flügelbereichen grösser ausgebildet sind. Der Winkel zwischen der Biegekante 34 und der Kolonnenwand 10 kann auch eine variable Grösse sein.

Bei der Ausführungsform der Fig. 7 weist eine Reihe von Austrittsöffnungen 32, die in dem strichpunktiert angegebenen Streifen 32' angeordnet sind, im Zentrum eine schlitzförmige Öffnung 37 auf, in deren Bereich nur die Kolonnenwand 10 zum Leiten der Flüssigkeit 51 vorgesehen ist.

Zur Auslegung der Austrittsöffnungen 32 kann wie folgt vorgegangen werden: Wie die Darstellung in Fig. 8 zeigt, wird der Trennboden 2 im Bereich zwischen der Sohle 31 eines Ablaufschachts 3 (in der Draufsicht gesehen) und dem Auslasswehr 30a des nachfolgenden Ablaufschachts 3 mittels Ellipsen 65 in 2N Streifen Sₙ unterteilt (n = 1, ... N; im Beispiel ist N = 4). Die grossen Achsen der Ellipsen 65 fallen mit dem in der Hauptströmungsrichtung 61 liegenden Kolonnendurchmesser d zusammen. Die kleinen Achsen unterscheiden sich jeweils um einen konstanten Betrag b (= d/N); die kleinste Ellipse ist zu einer auf dem Durchmesser d liegenden Strecke degeneriert. Die mittlere Länge eines Streifens Sₙ ist mit aₙ (n = 1, ... N) bezeichnet.

Die Sohle 31 wird in 2N Sektoren S'ₙ (n = 1, ... N) mit gleich grossen Winkeln α/2N unterteilt, wobei der Winkel α der zentrale Winkel ist, der durch die Sohle 31 im Zentrum der Kolonne aufgespannt wird. Jedem Sektor S'ₙ ist eine Austrittsöffnung 32 mit einem Flächeninhalt Aₙ zugeordnet. Durch eine solche Austrittsöffnung 32 tritt ein Flüssigkeitsstrahl 60 mit einem Volumenstrom Vₙ durch. Das Verhältnis Vₙ zu Aₙ ist die Ausflusszahl µₙ. Diese Zahl ist ein Mass für die Ausflussreduzierung, die von der Gestaltung der Austrittsöffnung 32 abhängt. Die Ausflusszahl µₙ hängt von der Form des Leitelements 4 und insbesondere von dessen Neigungswinkel ϕ ab. Statt einer Austrittsöffnung 32 können auch mehr als eine pro Sektor S'ₙ vorgesehen sein. Nachfolgend wird nur der Fall diskutiert, dass jeder Sektor S'ₙ nur eine Austrittsöffnung 32 aufweist.

Damit sich eine Angleichung der Verweilzeiten über das Strömungsfeld ergibt, muss das Verhältnis aₙ zu Vₙ, das proportional zur Verweilzeit im entsprechenden Streifen Sₙ ist, in jedem Streifen Sₙ gleich gross sein. Man erhält somit für die Flächeninhalte Aₙ die in Fig. 8 angegebene Beziehung. Durch Vorgabe des gesamten Volumenstroms (= 2V₁ + 2V₂ + ... + 2V_{N}) lässt sich die Auslegung der Flächeninhalte Aₙ durchführen, wobei vorausgesetzt ist, dass die Ausflusszahlen µₙ bekannt sind (beispielsweise aufgrund von durchgeführten Versuchen).

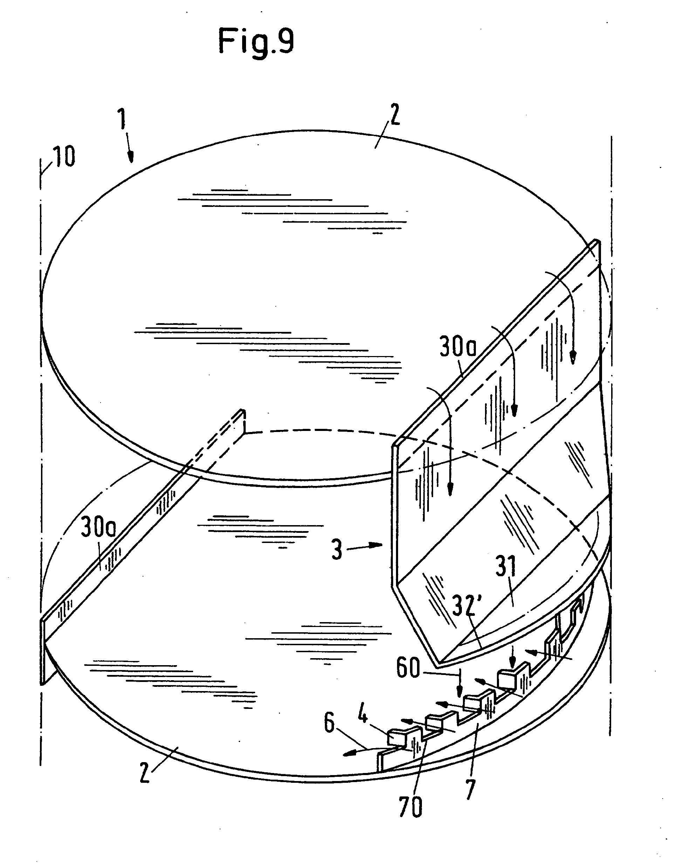

In Fig. 9 ist ein wehrartiger Strömungsbrecher 7 dargestellt, der auf dem Trennboden 2 unter dem Ablaufschacht 3 und unter nicht dargestellten, im Streifen 32' liegenden Austrittsöffnungen 32 angeordnet ist. Die Aussenwand der Bodenkolonne 1 ist in der Darstellung weggelassen und lediglich strichpunktiert angedeutet. Zumindest ein Teil der Leitelemente 4 sind an einem Überlaufrand 70 des Strömungsbrechers 7 angebracht.

Die Strömungsbrecher 7 sind mit Vorteil jeweils aus einem Blechstreifen gefertigt. Die Leitelemente 4 können einfach aus dem Blechstreifen durch Schneiden und Ausbiegen von Teilflächen hergestellt werden. Der Strömungsbrecher 7 kann aus mehreren Teilen zusammengesetzt sein. Er kann - wie in Fig. 9 dargestellt - gebogen sein; er kann aber auch die Form eines Polygonzugs mit mehreren geraden Abschnitten aufweisen.

Bei Verwendung des Strömungsbrechers 7 ist es möglich, dass an den Austrittsöffnungen 32 keine Leitelemente angeordnet sind. In diesem Fall sind also die Leitelemente 4 keine Teile des Ablaufschachts 3 sondern nur solche des Strömungsbrechers 7. Die Austrittsöffnungen 32 können alle gleich gross sein.

Ausser den oben beschriebenen Ausführungsformen sind weitere Modifikationen des Ablaufschachts 3 möglich, nämlich zumindest die Folgenden, die den Alternativen b) und c) :

Bei einer Modifikation zu der in den Figuren 1 und 5 dargestellten Ausführungsform, der Alternative b), sind die Leitelemente 4 nicht nach unten ausgebogen sondern gegen oben, um stromaufwärts vor den Austrittsöffnungen 32 die Einströmverhältnisse zu beeinflussen. Auch mit stromaufwärts angeordneten Leitelementen 4 kann die Strömung so beeinflusst werden, dass sich die für ein homogenes Strömungsfeld erforderlichen transversalen Impulskomponenten ergeben.

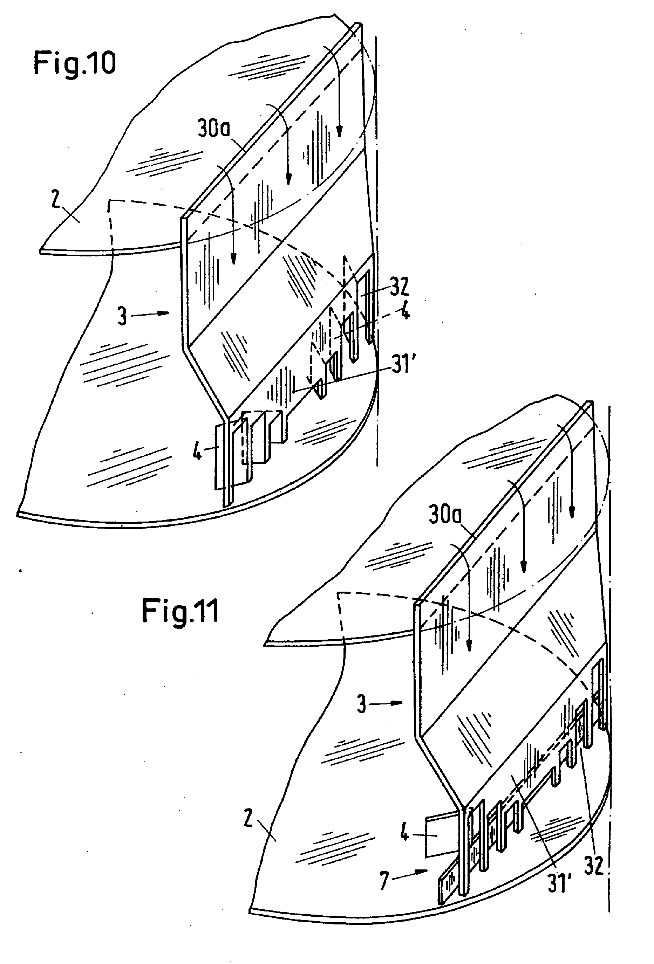

Bei einer weiteren nicht erfindungsgemässen Modifikation, der Alternative c), bildet statt der Sohle 31 ein vertikales Wandstück 31' einen Teil des unteren Abschlusses des Ablaufschachts 3: siehe die Figuren 10 und 11. Fig. 10 zeigt eine Ausführungsform, die jener der Figuren 1 und 5 entspricht. Fig. 11 zeigt eine Ausführungsform, die zu der in Fig. 9 dargestellten analog ist. Hier ist ein Strömungsbrecher 7 vor den Austrittsöffnungen 32 angeordnet. Von den Leitelementen 4 des Strömungsbrechers 7 ist in Fig. 11 nur eines sichtbar. Es liegt aber wie im Beispiel der Fig. 9 eine Mehrzahl von Leitelementen 4 vor.

## Patentansprüche

1. Bodenkolonne (1) mit einer strömenden Flüssigkeit (51) und mit Ablaufschächten (3) für einen Transport der Flüssigkeit zwischen benachbarten Böden (2), wobei der Flüssigkeitstransport in jedem Ablaufschacht durch eine Vielzahl von Austrittsöffnungen (32) auf einen beaufschlagten Boden erfolgt und Flüssigkeit den Austrittsöffnungen (32) in Form von Strahlen (60) entströmt, **dadurch gekennzeichnet, dass** die Austrittsöffnungen (32) jeweils in einem Wandstück angeordnet sind, welches einen unteren Abschluss des Ablaufschachts (3) oder Teil eines unteren Abschlusses bildet, wobei das Wandstück eine horizontale Sohle (31) ist, und dass ein Teil des Ablaufschachts, der einen Raumbereich zwischen einer Innenwand (30, 30b) und einer Kolonnenwand (10) unmittelbar über der Sohle einnimmt, nach unten sich verjüngend ausgebildet ist, sodass die Flüssigkeit beim Auftreffen auf den beaufschlagten Boden in ein bereichsweise divergentes Strömungsfeld (6) übergeht, das bezüglich einer longitudinalen Hauptströmungsrichtung (61) transversale Komponenten der Strömungsgeschwindigkeit aufweist, wobei Leitelemente (4)
a) unter den Austrittsöffnungen und in einem Abstand vom beaufschlagten Boden oder
b) an und über den Austrittsöffnungen oder
c) nach den Austrittsöffnungen
angeordnet sind, die jeweils den Impuls der Flüssigkeit dem divergenten Strömungsfeld entsprechend lenken und dabei zur Ausbildung der transversalen Geschwindigkeitskomponenten beitragen, so dass die longitudinale Komponente der Strömungsgeschwindigkeit in jeder Ebene senkrecht zur Hauptströmungsrichtung ein weitgehend konstantes Profil aufweist.

2. Bodenkolonne nach Anspruch 1, **dadurch gekennzeichnet, dass** die Austrittsöffnungen (32) in einer Reihe angeordnet sind, dass die Leitelemente (4) jeweils einer der Austrittsöffnungen zugeordnet sind und dass jedes Leitelement unmittelbar an einen Rand (33, 34) der zugeordneten Austrittsöffnung anschliesst, an den es beispielsweise angeschweisst ist.

3. Bodenkolonne nach Anspruch 2, **dadurch gekennzeichnet, dass** die Austrittsöffnungen (32) in einem Ringsegment (32') benachbart zu einer Kolonnenwand (10) angeordnet sind und dass die aus den Austrittsöffnungen abströmende Flüssigkeit (51) einerseits durch die Kolonnenwand und andererseits zumindest zu einem Teil durch die Leitelemente (4) lenkbar sind,
wobei jedes Leitelement schaufelartig und seine Position sowie Neigung den zu bewirkenden transversalen Geschwindigkeitskomponenten entsprechend ausgebildet sind.

4. Bodenkolonne nach Anspruch 3, **dadurch gekennzeichnet, dass** zumindest zu einem Teil die Austrittsöffnungen (32) durch partiell ausgeschnittene sowie um eine Kante (34) ausgebogene Innenflächen hergestellt sind und dass die ausgebogenen Innenflächen die schaufelartigen Leitelemente (4) bilden, wobei die Leitelemente verschiedene Neigungswinkel ϕ aufweisen und dass - bezogen auf ein Zentrum Z im zentralen Bereich - der Neigungswinkel mit zunehmender Entfernung vom Zentrum Z graduell anwächst, insbesondere von 0° bis 60°, vorzugsweise bis 45° anwächst.

5. Bodenkolonne nach einem der Ansprüche 1 bis 4, **dadurch gekennzeichnet, dass** unter oder vor den Austrittsöffnungen (32) einzelner oder aller Ablaufschächte (3) jeweils ein wehrartiger Strömungsbrecher (7) angeordnet ist und dass zumindest ein Teil der Leitelemente (4) an einem Überlaufrand (70) des Strömungsbrechers angeordnet sind, an den sie beispielsweise angeschweisst sind.

6. Bodenkolonne nach Anspruch 5, **dadurch gekennzeichnet, dass** die Strömungsbrecher (7) jeweils aus einem Blechstreifen gefertigt sind und dass die Leitelemente (4) aus dem Blechstreifen durch Schneiden und Ausbiegen von Teilflächen hergestellt sind.

7. Bodenkolonne nach Anspruch 5 oder 6, **dadurch gekennzeichnet, dass** die Leitelemente (4) nur Teile der Strömungsbrecher (7) sind.

8. Bodenkolonne nach einem der Ansprüche 1 bis 7, **dadurch gekennzeichnet, dass** die Böden (2) eine Vielzahl von Rostelementen (20) umfassen, welche jeweils die Form eines Trapezes haben, wobei nichtparallele Flanken (21a, 21 b) des Trapezes länger als eine Basisseite (22) sind, dass ferner die Basisseiten quer zur Hauptströmungsrichtung (61) orientiert sind, die Flanken der Rostelemente als Schlitze (23) ausgebildet sind, die Rostelemente sich in der Hauptströmungsrichtung verjüngen und vorzugsweise alle Rostelemente gleich orientiert sowie auf einem regelmässigen Punktegitter (25) angeordnet sind.

9. Bodenkolonne nach einem der Ansprüche 1 bis 8, **dadurch gekennzeichnet, dass** sie einen kreisförmigem Querschnitt hat, dass in jeden Boden (2) ein Ablaufschacht (3) eingebaut ist und dass die Ablaufschächte benachbarter Böden zueinander diametral angeordnet sind.

10. Bodenkolonne nach Anspruch 1, **dadurch gekennzeichnet dass** die Austrittsöffnungen in gradueller Weise verschieden gross ausgebildet sind, in einem zentralen Bereich kleiner als in benachbarten Flankenbereichen.

11. Bodenkolonne nach Anspruch 1, **dadurch gekennzeichnet, dass** die Austrittsöffnungen (32) in einem Ringsegment (32') benachbart zu der Kolonnenwand (10) angeordnet sind.

## Claims

1. A tray column (1) with a flowing liquid (51) and having downcomers (3) for a transport of the liquid between adjacent trays (2), with the liquid transport taking place in each downcomer through a plurality of discharge apertures (32) onto a loaded tray **characterised in that** the discharge apertures (32) are each arranged in a wall piece which forms a lower termination of the downcomer (3) or part of a lower termination, with the wall piece in particular being a horizontal base (31) or a vertical wall piece (31'); and **in that** part of the downcomer, which takes up a space region between an inner wall (30, 30b) and the column wall (10) directly above the base, is made downwardly tapering such that the liquid flowing out of the discharge apertures in the form of jets (60) blending into a regionally divergent flow field (6) on striking the loaded tray, said flow field having transverse components of the flow speed with respect to a longitudinal main flow direction (61),
whereby guide elements (4) are arranged
a) beneath the discharge apertures and at a spacing from the loaded tray, or
b) on and above the discharge apertures, or
c) after the discharge apertures,
said guide elements (4) each guiding the impulse of liquid corresponding to the divergent flow field and thereby contributing to forming the transverse speed components such that the longitudinal component of the flow speed has a largely constant profile in each plane perpendicular to the main flow direction.

2. A tray column in accordance with claim 1, **characterised in that** the discharge apertures (32) are arranged in a row; **in that** the guide elements (4) are each associated with one of the discharge apertures; and **in that** each guide element adjoins a rim (33, 34) of the associated discharge opening to which it is welded for example.

3. A tray column in accordance with claim 2, **characterised in that** the discharge apertures (32) are arranged in a ring segment (32') adjacent to a column wall (10); and **in that** the liquid (51) flowing out of the discharge apertures can be guided on the one hand by the column wall and on the other hand, at least in part, by the guide elements (4), with each guide element being made in vane-like manner and its position and inclination being made corresponding to the transverse speed components to be produced.

4. A tray column in accordance with claim 3, **characterised in that** the discharge apertures (32) are produced at least in part by partially cut-out inner surfaces and inner surfaces bent out around an edge (34); and **in that** the bent out inner surfaces form the vane-like guide elements (4), with the guide elements having different inclination angles ϕ; and **in that** the inclination angle grows gradually - relative to a centre Z in the central region - as the distance to the centre Z increases, in particular from 0° to 60°, preferably up to 45°.

5. A tray column in accordance with any of claims 1 to 4, **characterised in that** a weir-like flow breaker (7) is arranged in each case beneath or in front of the discharge apertures (32) of individual or of all downcomers (3); and **in that** at least some of the guide elements (4) are arranged at an overflow rim (70) of the flow breaker, to which they are welded for example.

6. A tray column in accordance with claim 5, **characterised in that** the flow breakers (7) are each produced from a sheet metal strip; and **in that** the guide elements (4) are produced from the sheet metal strip by cutting and bending out of part areas.

7. A tray column in accordance with claim 5 or claim 6, **characterised in that** the guide elements 4 are only parts of the flow breakers (7).

8. A tray column in accordance with any one of claims 1 to 7, **characterised in that** the trays (2) include a plurality of grate elements (20) which each have the shape of a trapezoid, with non-parallel flanks (21a, 21b) of the trapezoid being longer than a base side (22); and **in that** furthermore the base sides are oriented transversely to the main flow direction (61), the flanks of the grate elements are formed as slots (23), the grate elements taper in the main flow direction and preferably all grate elements have the same orientation and are arranged on a regular point grid (25).

9. A tray column in accordance with any one of claims 1 to 8, **characterised in that** it has a circular cross-section; **in that** a downcomer (3) is installed in each tray (2); and **in that** the downcomers of adjacent trays are arranged diametrically opposite one another.

10. A tray column in accordance with claim 1, **characterised in that** the discharge apertures are made in different sizes in a graduated fashion to be smaller in a central region than in adjacent flank regions.

11. A tray column in accordance with claim 1, **characterised in that** the discharge apertures (32) are arranged in a ring segment (32') adjacent to the column wall (10).

## Revendications

1. Colonne à plateaux (1) avec un liquide (51) en écoulement et avec des tubes de retour (3) pour un transport du liquide entre des plateaux avoisinants (2), où le transport de liquide dans chaque tube de retour a lieu à travers une pluralité d'ouvertures d'évacuation (32) sur un plateau chargé, et le liquide s'écoule des ouvertures de sortie (32) en forme de jets (60), **caractérisée en ce que** les ouvertures de sortie (32) sont ménagées respectivement dans une pièce de paroi qui forme une fermeture inférieure du tube de retour (3) ou une partie d'une fermeture inférieure, où la pièce de paroi est une semelle horizontale (31), et **en ce qu'**une partie du tube de retour, qui occupe une zone spatiale entre une paroi intérieure (30, 30b) et une paroi de colonne (10) directement au-dessus de la semelle, est réalisée en retrécissant vers le bas de sorte que le liquide, lorsqu'il heurte le plateau chargé, devient un champ d'écoulement (6) divergent par zones qui présente relativement à une direction d'écoulement principale longitudinale (61) des composants transversaux de la vitesse d'écoulement, où sont disposés des éléments conducteurs (4)
a) sous les ouvertures de sortie et à une distance du plateau chargé ou
b) à ou au-dessus des ouvertures de sortie ou
c) en aval des ouvertures de sortie, qui dirigent respectivement l'impulsion du liquide d'une manière correspondante au champ d'écoulement divergent et contribuent ainsi à réaliser la composante de vitesse transversale de sorte que la composante longitudinale de la vitesse d'écoulement dans chaque plan perpendiculairement à la direction d'écoulement principale présente un profil sensiblement constant.

2. Colonne à plateaux selon la revendication 1, **caractérisée en ce que** les ouvertures de sortie (32) sont disposées en une rangée, **en ce que** les éléments conducteurs (4) sont associés respectivement à une des ouvertures de sortie et **en ce que** chaque élément conducteur fait directement suite à un bord (33, 34) de l'ouverture de sortie associée, auquel il est par exemple soudé.

3. Colonne à plateaux selon la revendication 2, **caractérisée en ce que** les ouvertures de sortie (32) sont disposées dans un segment annulaire (32') d'une manière avoisinante à une paroi de colonne (10), et **en ce que** le liquide (51) s'écoulant des ouvertures de sortie peut être guidé, d'une part, par la paroi de colonne et, d'autre part, au moins en partie par les éléments conducteurs (4),
où chaque élément conducteur est réalisé en forme d'aube et sa position et inclinaison sont réalisées d'une manière correspondante aux composantes de vitesse transversales à obtenir.

4. Colonne à plateaux selon la revendication 3, **caractérisée en ce qu'**au moins en partie, les ouvertures de sortie (32) sont réalisées par des faces intérieures partielles découpées et courbées autour d'une arête (34), et **en ce que** les faces intérieures courbées forment les éléments conducteurs en forme de pelle (4), où les éléments conducteurs présentent différents angles d'inclinaison ϕ, et **en ce que** - relativement à un centre Z dans la zone centrale - l'angle d'inclinaison croît progressivement au fur et à mesure qu'augmente la distance du centre Z, croît en particulier de 0° à 60°, de préférence jusqu'à 45°.

5. Colonne à plateaux selon l'une des revendications 1 à 4, **caractérisée en ce qu'**est disposé sous ou en amont des ouvertures de sortie (32) de quelques ou tous les tubes de retour (3) respectivement un organe briseur d'écoulement (7) semblable à un barrage, et **en ce qu'**au moins une partie des éléments conducteurs (4) sont disposés à un bord de débordement (70) de l'organe briseur d'écoulement auquel ils sont par exemple soudés.

6. Colonne à plateaux selon la revendication 5, **caractérisée en ce que** les organes briseurs d'écoulement (7) sont fabriqués chacun en une bande de tôle, et ce que les éléments conducteurs (7) sont fabriqués à partir des bandes de tôle par découpage et courbure de faces partielles.

7. Colonne à plateaux selon la revendication 5 ou 6, **caractérisée en ce que** les éléments conducteurs (4) sont seulement des parties des organes briseurs d'écoulement (7).

8. Colonne à plateaux selon l'une des revendications 1 à 7, **caractérisée en ce que** les fonds (2) comportent une pluralité d'éléments de grille (20) qui ont chacun la forme d'un trapèze, où des flancs non-parallèles (21a, 21b) du trapèze sont plus longs qu'un côté de base (22), **en ce qu'**en outre les côtés de base sont orientés transversalement à la direction d'écoulement principale (61), les flancs des éléments de grille sont réalisés sous forme de fentes (23), les éléments de grille retrécissent dans la direction d'écoulement principale et de préférence tous les éléments de grille sont orientés de la même manière et sont disposés sur une trame de points régulière.

9. Colonne à plateaux selon l'une des revendications 1 à 8, **caractérisée en ce qu'**elle possède une section transversale circulaire, **en ce que** dans chaque plateau (2) est inséré un tube de retour (3) et **en ce que** les tubes de retour de plateaux avoisinants sont disposés diamétralement les uns aux autres.

10. Colonne à plateaux selon la revendication 1, **caractérisée en ce que** les ouvertures de sortie sont progressivement de grandeurs différentes, plus petites dans une zone centrale que dans des zones de flanc avoisinantes.

11. Colonne à plateaux selon la revendication 1, **caractérisée en ce que** les ouvertures de sortie (32) sont disposées dans un segment annulaire (32') d'une manière avoisinante à la paroi de colonne (10).
